# EUROPEAN PATENT APPLICATION

(11) **EP 3 770 025 A1**
(43) Date of publication of application: **27.01.2021**
(21) Application number: 19461561.3
(22) Date of filing: 23.07.2019
(51) Int. Cl.: B60R 19/52

(54) **A PROTECTION SYSTEM FOR A HEAT EXCHANGER**

(71) Applicant: Valeo Autosystemy SP. Z.O.O., 32-050 Skawina (PL)
(72) Inventor: GODZINA, Radoslaw, 32-050 SKAWINA (PL); BARUS, Lukasz, 32-050 SKAWINA (PL); SZOSTEK, Dawid, 32-050 SKAWINA (PL); NAWROCKI, Mateusz, 32-050 SKAWINA (PL); WATOR, Tomasz, 32-050 SKAWINA (PL); JURKIEWICZ, Damian, 32-050 SKAWINA (PL)
(74) Representative: Bialkowski, Adam

(57) **Abstract**

A protection system for a heat exchanger is disclosed in accordance with an embodiment of the present invention. The protection system includes at least one net with a first pair of opposite sides and a second pair of opposite sides. The at least one net is deployed over at least one heat exchanger core to cover at least a portion of the at least one heat exchanger core, wherein the at least one net is mounted to either one of a pair of side plates of the at least one heat exchanger core and a pair of headers of the heat exchanger by means of a plurality of engagement elements to deploy the at least one net over the at least one heat exchanger core.

## Description

The present disclosure relates to a heat exchanger system, particularly, the present disclosure relates to a protection system for protecting a heat exchanger of a vehicle against impact from heavier articles such as stones, gravel, and the likes.

A vehicle includes several heat exchanger elements. Conventionally, an engine cooling system of a vehicle includes a heat exchanger in form of a radiator to facilitate cooling of an engine of the vehicle. Specifically, a coolant in form of glycol or water-glycol mixture is passed through the engine, from where the coolant absorbs heat and becomes hot. The hot coolant is then fed into an inlet tank of the radiator that is located either on top of the radiator or along one side of the radiator, from the inlet tank the hot coolant is distributed across a radiator core through radiator tubes to another tank on an opposite end of the radiator. As the hot coolant passes through the radiator tubes to the opposite tank, the coolant transfers heat to the radiator tubes of the radiator core, which in turn, transfers the heat to fins that are lodged between each row of radiator tubes. The fins then release the heat to the ambient air that flows across the radiator core. For effective and efficient performance of the radiator, there should be unhindered supply of ambient air to the radiator core. In order to save the power consumption in the vehicle, natural draft of air across the radiator core is utilized. For achieving natural draft of air across the radiator core, the radiator core is disposed behind a front grill of the vehicle, wherein the front grill is disposed between a front hood and a front bumper of the vehicle such that the ram air impinges on the front grille of the vehicle as the vehicle moves in forward direction. Such strategic placement of the radiator core enables the ram air to impinge on and pass through the radiator core disposed behind the front grille, thereby creating natural draft of air across the radiator core as the vehicle moves ahead in the forward direction. The engine cooling system often incorporates one or more fans disposed behind the radiator core to generate a forced draft of air that facilities passage of air through the radiator core. The forced draft generated by the fans improves the performance and efficiency of the radiator by improving the air flow rate through the radiator by increasing the air speed. The radiator may be disposed either alone or in series with other heat exchange elements such as for example, a condenser, a chiller or any other heat exchanger that require draft of air for efficient operation thereof. Also, the sequence in which the radiator, condenser and chillers or any other heat exchanger are disposed may vary, for example, sometimes the radiator is at the front to first receive the ram air and in other cases the condenser is at the front to first receive the ram air. The position of the radiator and the condenser can interchange.

However, when the vehicle is travelling in off-road conditions or over a rough terrain, heavier articles such as stones, gravel, and the likes may approach the vehicle, cross the front grill through gaps between elements of the front grill and strike a front face of the heat exchanger core, such as for example, radiator core or condenser core. As a result, the heavier article may cause damage to, particularly, may cause cracks in the heat exchange tubes carrying heat exchange fluid there through. The cracks may cause leakage of the heat exchange fluid through the tubes. The continuous leakage of the heat exchange fluid from the heat exchange tubes may result in problems such as pressure loss inside the heat exchanger tubes, heat exchanger tank requiring frequent refilling and inefficient operation of the heat exchanger due to insufficient heat exchange fluid. Conditions such as dropping of heat exchange fluid levels in the heat exchanger, for example radiator below critical level may render the radiator inefficient, thereby resulting in engine seizure due to excessive heat. The cracks may also act as points of stress concentration, thereby may cause mechanical failure of the radiator. In case the heavier articles strike the delicate fin elements disposed between adjacent tubular elements, the fin elements may get damaged and not function as per design, thereby deteriorating efficiency and performance of the heat exchanger. Further, lighter articles such as paper, empty polythene bags, leaves and the likes carried with the ram air may get accumulated at the front face of the heat exchanger core, causing hindrance to air flow and preventing ram air from reaching and moving across the radiator or condenser core, thereby deteriorating efficiency and performance of the radiator or condenser.

Accordingly, there is a need for a protection system that not only protects the heat exchanger core such as radiator and/or condenser core against impact of heavier articles such as stones, gravel, and the likes but also maintains efficiency and performance of the radiator and/or condenser. Further, there is a need for protection system that is adjustable and that can be applied on different sized heat exchanger cores for protection thereof. Still further, there is a need for a protection system that acts as a barrier at front of the radiator or condenser core and prevents heavier article such as stones, gravel, and the likes from impacting and damaging the radiator and/or condenser core, while still not compromising air flow through the radiator or condenser core. Still further, there is a need for a protection system that prevents lighter articles from causing hindrance to air flow to radiator or condenser, while still maintaining the efficiency and performance of the radiator or condenser. Still further, there is a need for a protection system that is stably held in place away from the radiator or condenser and prevents noise generation due to vibrations or hard to hard contact between the elements of the protection system and the radiator or the condenser. Yet another object of the present invention is to provide a protection system that can be conveniently and quickly configured or assembled or retrofitted on the heat exchanger without requiring any dedicated tools for configuring the assembly of the protection over the heat exchanger. Yet another object of the present invention is to provide a protection system that forms a secure connection with the heat exchanger core. Still another object of the present invention is to provide a protection system that enhances service life and reliability of the heat exchanger core. Yet another object of the present invention is to provide a protection system that is easily replaceable and requires less maintenance. Still another object of the present invention is to provide a protection system that effectively dissipates high impact energy of the heavier article before the heavier article incase hits the heat exchanger core.

An object of the present invention is to provide a protection system that acts as a barrier to protect a heat exchanger core, particularly, a radiator core and/or condenser core against damage from impact of heavier articles such as stones, gravel, and the likes, while still not compromising air flow through the radiator or condenser core.

An object of the present invention is to provide a protection system that can be mounted on different sized heat exchanger cores for protecting the different sized heat exchanger cores.

Still another object of the present invention is to provide a protection system that can be easily retrofitted over current radiators and /or condensers without requiring any modifications in the current radiators and /or condensers and without requiring dedicated tools for the assembly.

Another object of the present invention is to provide a protection system that can be maintained in a spaced configuration with respect to the heat exchanger core, thereby preventing any noise generation caused by hard to hard contact during vibrations and also effectively dissipating high impact energy of the heavier article before the heavier article incase hits the heat exchanger core.

Another object of the present invention is to provide a protection system that enhances service life of a heat exchanger such as a radiator and/or condenser and reduces maintenance thereof.

Yet another object of the present invention is to provide a protection system that is inexpensive and also convenient to manufacture, assemble and use.

Still another object of the present invention is to provide a protection system that prevents lighter articles such as paper, polythene bags and leaves from getting in to path of ram air approaching a heat exchanger core such as for example, a radiator core and /or condenser core.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A protection system for a heat exchanger is disclosed in accordance with an embodiment of the present invention. The protection system includes at least one net with a first pair of opposite sides and a second pair of opposite sides. The at least one net is deployed over at least one heat exchanger core to cover at least a portion of the at least one heat exchanger core, wherein the at least one net is mounted to either one of a pair of side plates of the at least one heat exchanger core and a pair of headers of the heat exchanger by means of a plurality of engagement elements to deploy the at least one net over the at least one heat exchanger core.

In accordance with an embodiment of the present invention, the plurality of engagement elements interchangeably mount the first pair of opposite sides of the at least one net over the pair of headers of the heat exchanger.

Generally, the engagement elements are directly configured on respective sides of the first pair of opposite sides of the at least one net and detachably engage with the pair of headers of the heat exchanger.

In accordance with an embodiment of the present invention, at least one net is of either one of plastic and metal and includes a pair of first frame elements integrally formed along the first pair of opposite sides thereof, the pair of first frame element is configured with engagement elements to detachably and interchangeably mount the pair of first frame elements with the at least one net disposed there between to the pair of headers of the heat exchanger.

Alternatively, the pair of first frame elements is either one of metal and plastic, the pair of first frame elements is secured along the first pair of opposites sides of the at least one net by either one of stamping, pressing and over-molding, further the pair of first frame elements is configured with engagement elements to detachably mount the pair of first frame elements with the at least one net disposed there between to the pair of headers of the heat exchanger.

Further, the engagement elements are configured on the pair of headers and interchangeably engage with either one of the first pair of opposite sides of the at least one net and the pair of first frame elements.

In accordance with another embodiment of the present invention, the plurality of engagement elements interchangeably mount the second pair of opposite sides of the at least one net over the pair of side plates of the at least one heat exchanger core.

Specifically, the engagement elements are directly configured on the second pair of opposite sides of the at least one net and detachably engages with the pair of side plates of the at least one heat exchanger core.

In accordance with an embodiment of the present invention, at least one net is either one of plastic and metal and includes a pair of second frame elements integrally formed along the second pair of opposite sides thereof, the pair of second frame elements is configured with engagement elements that detachably and interchangeably mount the pair of second frame elements with the at least one net disposed there between to the pair of side plates of the at least one heat exchanger core.

Generally, the pair of second frame elements is either one of metal and plastic, the pair of frame elements is secured on the second pair of opposites sides of the at least one net by either one of stamping, pressing and over-molding, further the pair of second frame elements is configured with engagement elements to detachably mount the pair of second frame elements to the pair of side plates of the at least one heat exchanger core.

Alternatively, the engagement elements are configured on the pair of side plates and interchangeably engages with either one of the second pair of opposite sides of the at least one net and the pair of second frame elements.

In accordance with an embodiment of the present invention the at least one net is of either one of Kevlar® and glass fibre material coated with Poly-tetra-fluoro-ethylene (PTFE) material.

Specifically, the engagement elements are selected from a group comprising of snap fit engagement elements, hooks and clips.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:

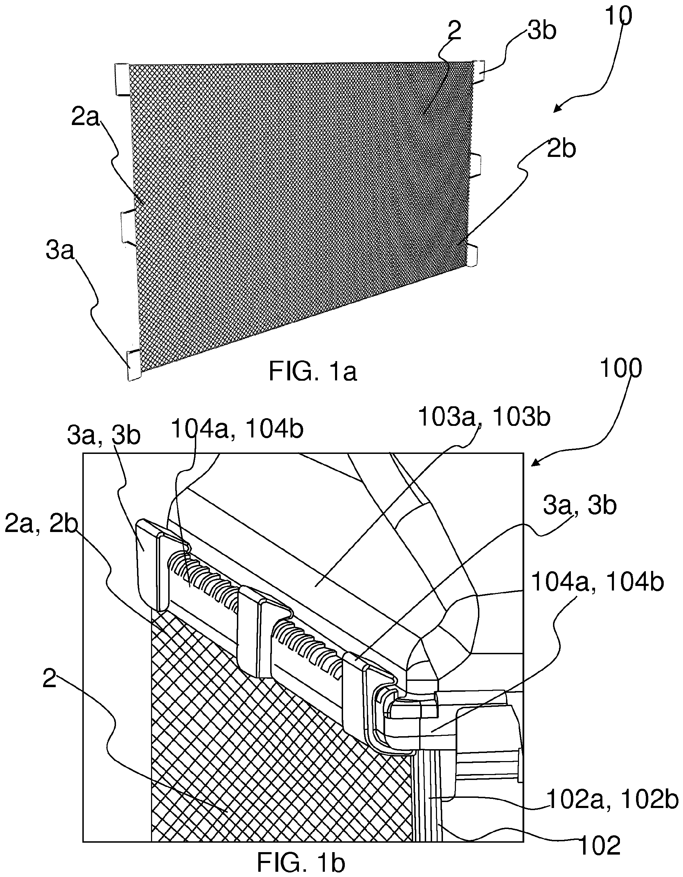

**FIG. 1a** illustrates an isometric view of a protection system in accordance with an embodiment of the present invention, wherein the protection system includes a net with engagement elements directly configured at first pair of opposite sides of the net;
**FIG. 1b** illustrates a schematic representation of a portion of a heat exchanger with the protection system of **FIG. 1a** deployed on a heat exchanger core of the heat exchanger, wherein the engagement elements directly configured on the net of the protection system are depicted snap fitting over a corresponding header of the pair of headers of the heat exchanger;

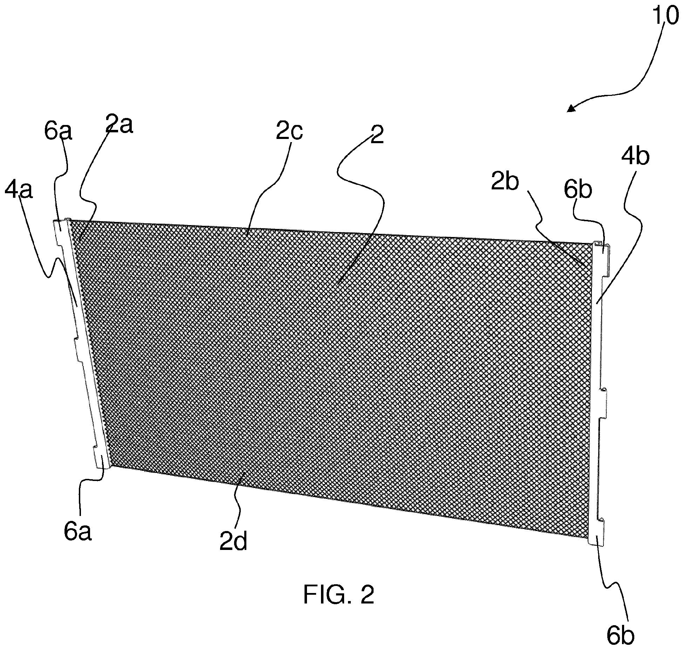

**FIG. 2** illustrates an isometric view of a protection system in accordance with another embodiment of the present invention, wherein engagement elements are configured on a pair of first frame elements that in turn are configured on a first pair of opposite sides of a net;

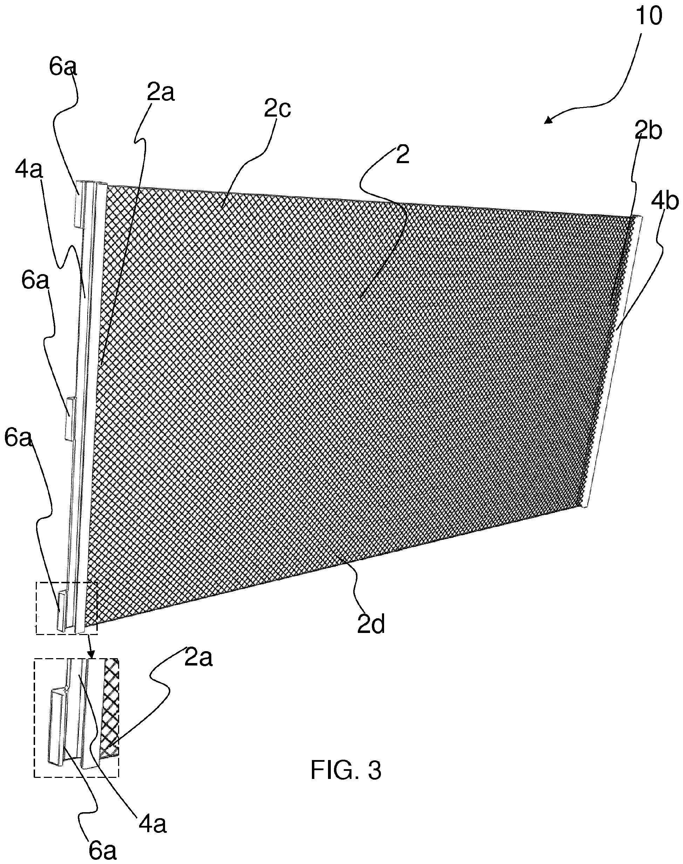

**FIG. 3** illustrates another isometric view of the protection system of the **FIG. 2**, also is depicted an enlarged view of one of the engagement elements configured on one of the frame elements of the protection system;

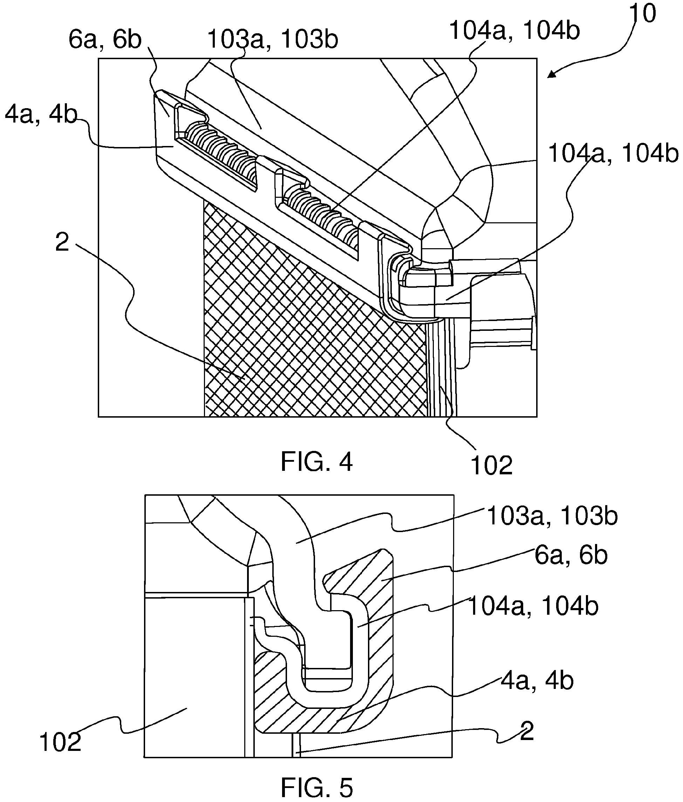

**FIG. 4** illustrates a schematic representation of a portion of a heat exchanger with the protection system of **FIG. 2** and **FIG. 3** deployed thereon, wherein the engagement elements of the protection system are depicted snap fitting over a corresponding header of the pair of headers;
**FIG. 5** illustrates a sectional view depicting snap fit engagement between an engagement element of the plurality of engagement elements configured on a frame element of the pair frame elements and the corresponding header of the pair of headers, also is depicted crimping between the header of the pair headers and a corresponding tank of the pair of tanks of the heat exchanger of **FIG. 4****;**

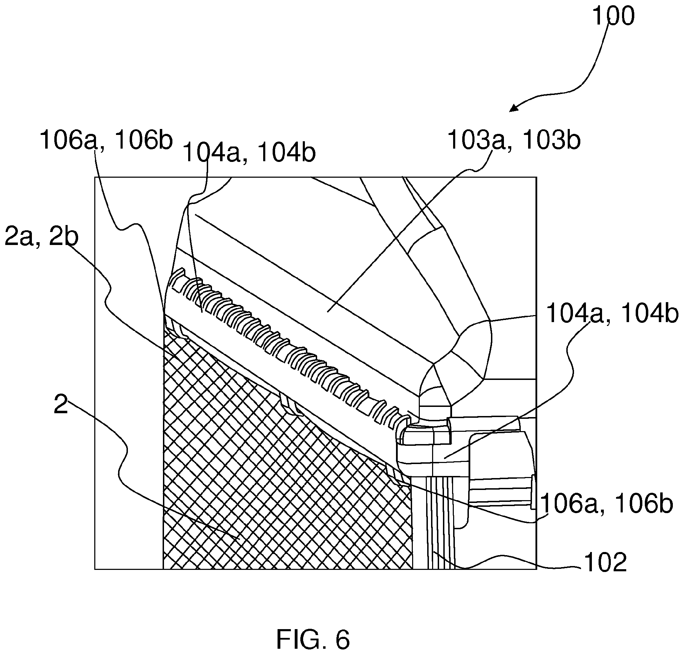

**FIG. 6** illustrates an isometric view of a protection system in accordance with another embodiment of the present invention deployed over a heat exchanger core of a heat exchanger, wherein engagement elements extending from a header of a pair of headers of the heat exchanger engages with a side of the first pair of opposite sides of a net;

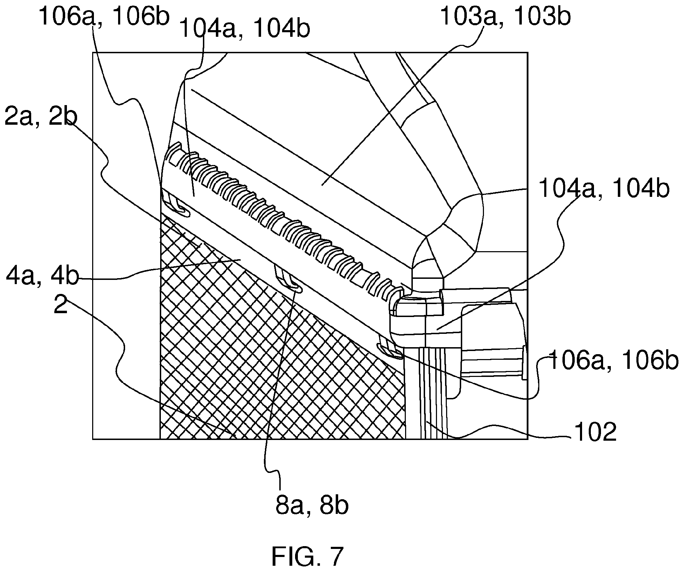

**FIG. 7** illustrates another schematic representation of a protection system in accordance with still another embodiment of the present invention, wherein a net includes a pair of first frame elements disposed at a pair of opposite sides thereof and engagement elements extending from a header of a pair of headers are depicted received in apertures configured on a first frame element of the pair of first frame elements;

The present invention envisages a protection system that includes at least one net with a first pair of opposite sides and a second pair of opposite sides. Either the first pair of opposite sides of the at least one net is interchangeably snap fitting over a pair of headers of a heat exchanger or the second pair of opposite sides of the at least one net is interchangeably snap fitting over a pair of opposite side plates configured on the heat exchanger core. The protection system is deployed over the at least one heat exchanger core and covers and provides protection to the at least one heat exchanger core of a vehicle, such as for example, a radiator core and/or a condenser core against impact from heavier articles such as stones, gravel, and the likes. Although, the protection system of the present invention is used in heat exchangers, such as for example, radiators, condensers and evaporators that are used in vehicles, however, the protection system of the present invention is also applicable to any other heat exchangers or delicate elements for use in vehicular and non-vehicular environment that require protection against impact of heavier articles such as stones and gravels striking such elements.

Referring to **FIG. 1a** **-** **FIG. 7** of the accompanying drawings, schematic representations of a protection system **10**, in accordance with different embodiments of the present invention are illustrated. The protection system **10** includes at least one net **2**. The at least one net **2** is of meshed configuration and a first pair of opposite sides **2a**, **2b** and a second pair of opposite sides **2c**, **2d** define the boundary of the at least one net **2**. For deploying the at least one net **2** over a heat exchanger core **102**, the at least one net **2** is mounted to either one of a pair of headers, particularly opposite headers **104a**, **104b** of a heat exchanger **100** by using a plurality of first engagement elements **3a**, **3b**, **6a**, **6b**, **106a**, **106b** or a pair of side plates, particularly, opposite side plates **102a**, **102b** of the heat exchanger core **102** by using a plurality of second engagement elements **3c**, **3d**, **6c**, **6d**, **106c**, **106d**.

In accordance with an embodiment of the present invention, the plurality of first engagement elements **3a**, **3b**, **6a**, **6b**, **106a**, **106b** interchangeably mount the first pair of opposite sides **2a**, **2b** of the at least one net **2** over the pair of headers **104a**, **104b** of the heat exchanger **100** to deploy the at least one net **2** over the at least one heat exchanger core **102** in which the at least one net **2** covers at least a portion of the heat exchanger core **102** and protects the heat exchanger core **102** against damage from impact of heavier articles such as stones and gravels.

Although, as per the disclosure made in the present specification, the protection system **10** is mounted on the pair of opposite headers **104a**, **104b** of the heat exchanger **100**. However, the protection system **10** can also be mounted on the pair of opposite side plates **102a**, **102b** disposed at opposite sides of the heat exchanger core **102** other than the opposite sides of the heat exchanger core **102** on which the headers **104a**, **104b** are disposed. Particularly, the second pair of opposite sides **2c**, **2d** of the at least one net **2** can be interchangeably mounted on the pair of opposite side-plates **102a**, **102b** by using second engagement elements **3c**, **3d**, **6c**, **6d**, **106c**, **106d** that are similar to the first engagement elements **3a**, **3b**, **6a**, **6b**, **106a**, **106b** used for mounting the at least one net **2** over the pair of opposite headers **104a**, **104b** of the heat exchanger core **102**. Every embodiment disclosed henceforth explaining mounting of the protection system **10** on the pair of opposite headers **104a**, **104b** of the heat exchanger **100** is also applicable for the protection system **10** mounted on the pair of opposite side plates **102a**, **102b** and for the sake of brevity of the present invention the protection system **10** is described by way of forthcoming description and accompanying drawing in which the protection system **10** is described as being mounted on the headers **104a**, **104b** and as such the forthcoming description and accompanying drawing should not be construed as limiting.

Specifically, as illustrated in **FIG. 1a** and **FIG. 1b**, the plurality of first engagement elements **3a**, **3b** are directly configured on respective sides of the first pair of opposite sides **2a**, **2b** of the at least one net **2.** The first engagement elements **3a**, **3b** interchangeably and detachably engage with the pair of headers **104a**, **104b** of the heat exchanger **100** to configure connection between the first pair of opposite sides **2a**, **2b** of the at least one net **2** and the pair of headers **104a**, **104b** of the heat exchanger **100** to deploy the at least one net **2** over the heat exchanger core **102**. In accordance with an embodiment, the first engagement elements **3a**, **3b** are snap fit elements as illustrated in **FIG. 1b**. However, the present invention is not limited to any particular configuration, placement and number of the first engagement elements **3a**, **3b** configured along the first pair of opposite sides **2a**, **2b** of the at least one net **2**, as far as the first engagement elements **3a**, **3b** form interchangeable, convenient, quick and detachable connection between the first pair of opposite sides **2a**, **2b** of the at least one net **2** and the pair of headers **104a**, **104b** of the heat exchanger **100** to deploy the at least one net **2** over the heat exchanger core **102**.

Instead of the at least one net **2** being directly mounted on the opposite headers **104a**, **104b** of the heat exchanger **100**, the at least one net **2** can be mounted over the opposite headers **104a**, **104b** via a pair of first frame elements **4a, 4b.** **FIG. 2** illustrates the at least one net **2** configured with the pair of first frame elements **4a**, **4b** at the first pair of opposite sides **2a**, **2b** thereof. **FIG. 3** illustrates another isometric view of the protection system **10**, also is depicted an enlarged view of one of the engagement elements **06a**, **06b** configured on one of the frame elements of the pair of first frame elements **4a**, **4b** of the protection system **10.** **FIG. 4** illustrates a schematic representation of a portion of the heat exchanger **100** with the protection system **10** deployed over the heat exchanger core **102**, wherein the engagement elements **6a**, **6b** of the protection system **10** are depicted snap fitting over the corresponding header of the pair of opposite headers **104a**, **104b**. **FIG. 5** illustrates a sectional view depicting snap fit engagement between an engagement element of the plurality of engagement elements **6a**, **6b** configured on a first frame element of the pair of first frame elements **4a**, **4b** and the corresponding header of the pair of opposite headers **104a**, **104b**. Also, is depicted crimping between the header of the pair of opposite headers **104a**, **104b** and a corresponding tank of a pair of tanks **103a**, **103b** of the heat exchanger **100**. Specifically, the engagement element **6a, 6b** configured on the first frame element **4a, 4b** snap fits over the corresponding header **104a**, **104b** that is crimped to the corresponding tank **103a**, **103b**. Similarly, a pair of second frame elements **4c**, **4d** configured along the second pair of opposite sides **2c**, **2d** of the at least one net **2** with second engagement elements **3c**, **3d**, **6c**, **6d**, **106c**, **106d** can be used to deploy the at least one net **2** over the pair of opposite side plates **102a**, **102b** of the heat exchanger core **102.**

Specifically, the pair of first frame elements **4a**, **4b** of either metal or plastic is integrally formed along the first pair of opposite sides **2a**, **2b** of the at least one net **2** of metal or plastic respectively. The pair of first frame elements 4a, 4b is configured with first engagement elements 6a, 6b to detachably and interchangeably mount the pair of first frame elements 4a, 4b with the at least one net 2 disposed there between to the pair of opposite headers **104a, 104b** of the heat exchanger 100. More specifically, one of the first frame elements 4a, 4b integrally formed along the one side of the first pair of opposite sides 2a, 2b of the at least one net 2 is mounted to one of the opposite headers **104a**, **104b** by engagement between one of the engagement elements 6a, 6b configured on one of the first frame elements **4a**, **4b** and one of the headers **104a**, **104b**. Similarly, the other of first frame elements **4a**, **4b** integrally formed along the other remaining side of the first pair of opposite sides **2a**, **2b** of the at least one net **2** is mounted to the remaining of the opposite headers **104a**, **104b** by engagement between the remaining of the engagement elements **6a**, **6b** configured on the remaining of the first frame elements **4a**, **4b** and remaining of the opposite headers **104a**, **104b** for deploying the at least one net **2** over the heat exchanger core **102**.

Alternatively, the pair of first frame elements **4a**, **4b** is either one of metal and plastic, the pair of first frame elements **4a**, **4b** is also of either one of metal and plastic and is secured along the first pair of opposites sides **2a**, **2b** of the at least one net **2** by any one of stamping, pressing and over-molding process. In accordance with an embodiment of the present invention, the pair of first frame elements **4a**, **4b** is of plastic material and is over molded along the first pair of opposite sides **2a**, **2b** of the at least one net **12** of plastic material. In accordance with another embodiment of the present invention, the pair of first frame elements **4a**, **4b** is of metal and is secured along the first pair of opposite sides **2a**, **2b** of the at least one net **2** of metal or plastic by stamping and pressing. However, the present invention is not limited to any particular method of securing the pair of first frame elements **4a**, **4b** to the first pair of opposite sides **2a**, **2b** of the at least one net **2**. Further, the pair of first frame elements **4a**, **4b** is configured with engagement elements **6a**, **6b** to detachably mount the pair of first frame elements **4a**, **4b** with the at least one net **2** disposed there-between to the pair of opposite headers **104a**, **104b** of the heat exchanger 100. The pair of first frame elements **4a**, **4b** secured along and forming a continuous connection with the first pair of opposite sides **2a**, **2b** is mounted on the pair of opposite headers **104a**, **104b** for deploying the at least one net **2** over the heat exchanger core **102** in a similar manner in which the first frame elements **4a**, **4b** integrally formed along the first pair of opposite sides **2a**, **2b** is mounted on the pair of opposite headers **104a, 104b** and is not elaborately described for the sake of brevity of the present document.

In accordance with an embodiment, the engagement elements **6a**, **6b** are snap fit elements as illustrated in **FIG. 3** **-** **FIG. 5****.** However, the present invention is not limited to any particular configuration of the pair of first frame elements **4a**, **4b** that are either integrally formed or secured to the first pair of opposite sides **2a**, **2b** of the at least one net **2**, placement and number of the engagement elements **6a, 6b** configured along the pair of first frame elements **4a, 4b**, as far as the pair of first frame elements **4a**, **4b** along with the engagement elements **6a, 6b** configure interchangeable, convenient, quick and detachable connection of the at least one net **2** with the opposite headers **104a**, **104b** of the heat exchanger **100** for deploying the at least one net **2** over the heat exchanger core **102** of the heat exchanger **100.**

In accordance with an alternate embodiment of the present invention, the engagement elements are configured on the opposite headers **104a, 104b** instead of being configured on either one of the first pair of opposite sides **2a**, **2b** of the at least one net **2** or the pair of first frame elements **4a, 4b** integrally formed along the first pair of opposite sides **2a, 2b** of the at least one net **2** or the pair of first frame elements **4a, 4b** secured along the first pair of opposite sides **2a, 2b** of the at least one net **2.** More specifically, as illustrated in **FIG. 6** and **FIG. 7**, the engagement elements **106a**, **106b** are configured on the pair of opposite headers **104a, 104b** and interchangeably engage with either one of the first pair of opposite sides **2a**, **2b** of the at least one net **2** and the pair of the first frame elements **4a**, **4b.** **FIG. 6** illustrates an isometric view of the protection system **10** in accordance with another embodiment of the present invention deployed over the heat exchanger core **102** of the heat exchanger **100**, wherein the first engagement elements **106a**, **106b** extending from the pair of opposite headers **104a**, **104b** of the heat exchanger **100** directly engages with the first pair of opposite sides **2a**, **2b** of the at least one net **2**. **FIG. 7** illustrates another schematic representation of the protection system **10** in accordance with still another embodiment of the present invention, wherein the at least one net **2** includes the pair of first frame elements **4a**, **4b** disposed at the first pair of opposite sides **2a**, **2b** thereof and engagement elements **106a**, **106b** extending from the pair of opposite headers **104a**, **104b** are received in apertures **8a**, **8b** configured on the pair of first frame elements **4a**, **4b.** In accordance with an embodiment, the engagement elements **106a**, **106b** are hook elements as illustrated in **FIG**. **6** - **FIG. 7**. However, the present invention is not limited to any particular configuration, placement and number of the engagement elements **106a**, **106b** configured along the pair of opposite headers **104a**, **104b**, as far as the engagement elements **106a, 106b** form interchangeable, convenient, quick and detachable connection between either the first pair of opposite sides **2a**, **2b** of the at least one net **2** or the pair of first frame elements **4a**, **4b** with the at least one net **2** disposed there between and the first pair of the opposite headers **104a, 104b** of the heat exchanger **100** for deploying the at least one net **2** over the heat exchanger core **102** of the heat exchanger **100**. Such configuration eliminates the need for configuring additional engagement elements anywhere on the at least one net **2** or the pair of first frame element **4a, 4b** integrally formed or secured along the first pair of opposite sides **2a, 2b** of the at least one net **2.**

Apart from above mentioned configurations of the at least one net **2** and method for deploying the at least one net **2** over the heat exchanger core **102**, there could be different configurations of the at least one net **2** and methods for securely deploying the at least one net **2** over the heat exchanger core **102.** For example, instead of the at least one net **2** being mounted to either one of the pair of opposite headers **104a, 104b** of the heat exchanger **100** and the pair of opposite side plates **102a, 102b** of the heat exchanger core **102**, the at least one net **2** can be mounted to one of the side plates of the pair of opposite side plates **102a**, **102b** and one of the headers of the pair of opposite headers **104a, 104b** to deploy the at least one net **2** over the heat exchanger core **102**. Particularly, the present invention is not limited to a particular configuration of the at least one net **2** and method for mounting the at least one net **2** anywhere over the heat exchanger **100** unless the at least one net **2** is capable of being deployed over the heat exchanger core **102** to cover and protect the heat exchanger core **102** against impact of heavier articles such as stones.

As at least one of the frame elements of the pair of frame elements **4a**, **4b** with the at least one net **2** held there between is detachably mounted on the at least one corresponding headers **104a, 104b** disposed on the opposite sides of the heat exchanger core **102**, complete or partial removal of the protection system **10** at will is possible to provide convenient access to the heat exchanger core **102**, the pair of opposite headers **104a**, **104b** and the corresponding tanks **103a**, **103b** or any other elements of the heat exchanger **100** for easy and convenient maintenance thereof. Further, such configuration of the protection system **10** facilitates quick and convenient assembly of the at least one net **2** over the heat exchanger core **102** and also eliminates need for configuring additional engagement elements anywhere on the heat exchanger **100**. As such the protection system **10** can be easily retrofitted over current heat exchangers, particularly, current radiators and /or condensers without requiring any modifications in the current radiators and /or condensers already configured on the vehicle.

The at least one net **2** can be of any material. however, there are advantages associated with using the at least one net **2** of flexible material with engagement elements for mounting of the at least one net **2** over either one of opposite headers **104a, 104b** and the pair of opposite side plates **102a, 102b** for deploying the at least one net **2** of flexible material over the heat exchanger core **102**. For example, the at least one net **2** being flexible is adjustably mounted on different heat exchanger cores **102** having slight variation in sizes to define the deployed configuration of the at least one net **2** over the different heat exchanger cores **102**. In the deployed configuration of the at least one net **2** of flexible material over the heat exchanger core **102**, the at least one net **2** is in tension and covers at least a portion of the heat exchanger core **102**. As the at least one net **2** is in tension, the heavier articles such as stones, gravel, and the likes striking the at least one net **2** bounces back away from the heat exchanger core **102**, thereby protecting the heat exchanger core **102** against the impact of the heavier articles such as stones, gravel. In accordance with still another embodiment of the present invention, the at least one net **2** is of either one of Kevlar® and glass fibre material coated with Poly-tetra-fluoro-ethylene (PTFE) material and acts as a tough barrier to impacting articles. The coating of Poly-tetra-fluoro-ethylene (PTFE) material imparts flexibility to the at least one net **2**. The coating of Poly-tetra-fluoro-ethylene (PTFE) material also imparts wear resistance and abrasion resistance to the at least one net **2**, thereby extending the service life of the protection system **10**. Such configuration of the at least one net **2** of Kevlar® and glass fibre material imparts high strength, high modulus, and toughness along with the thermal stability that renders the at least one net **2** suitable for such applications in which the at least one net **2** may be disposed near a heated surface of the radiator core and still exhibit high strength to withstand heavy impacts of high speed articles. In accordance with another embodiment, the at least one net **2** is configured of strands that are arranged in a criss-crossing manner with respect to each other for configuring a pattern of square shaped apertures or any other pattern as far as the apertures so configured are capable of preventing passage of an article of pre-determined size there through. However, the present invention is not limited to any particular configuration of the at least one net **2** and any particular material for configuring the at least one net **2** as far as the at least one net **2** acts as a strong barrier against impacting articles.

In accordance with another embodiment of the present invention, the at least one net **2** is of metal and is configured by at least one of stamping and pressing operations. Such configuration of the at least one net **2** of metal mounted over the pair of opposite headers **104a, 104b** of the heat exchanger **100** with the help of first engagement elements **3a**, **3b**, **6a**, **6b**, **106a**, **106b** is simple and such method for mounting the at least one net **2** over the heat exchanger core **102** is convenient and quick. Further, such at least one net **2** is easily replaceable with new net in case of damage. Still further, as the metal nets are produced in coils or sheets, the metal nets can be conveniently cut as per different dimensions of the heat exchanger core **102**.

The first pair of opposite sides **2a**, **2b** of the at least one net **2** or the pair of first frame elements **4a**, **4b** integrally formed along the first pair of the opposite sides **2a**, **2b** or the pair of first frame elements **4a**, **4b** secured along the first pair of the opposite sides **2a**, **2b** can be mounted to the pair of opposite headers **104a**, **104b** using first engagement elements **3a**, **3b**, **6a**, **6b**, **106a**, **106b** before or after the tanks **103a**, **103b** are assembled onto brazed heat exchanger core **102**.

In accordance with an embodiment of the present invention, the plurality of the first engagement elements **3a**, **3b**, **6a**, **6b**, **106a**, **106b** and the plurality of the second engagement elements **3c**, **3d**, **6c**, **6d**, **106c**, **106d** are selected from a group comprising of snap fit engagement elements, hooks and clips, however, the present invention is not limited to any particular configuration, number and placement of the engagement elements as far as the engagement elements are capable of configuring secure and detachable connection between the at least one net **2** and the pair of headers **104a, 104b** of the heat exchanger **100**.

However, the present invention is not limited to any particular configuration, material and method of manufacturing the pair of first frame elements **4a**, **4b** as far as the pair of first frame elements **4a**, **4b** are configurable on the opposite sides of the at least one net **2** and are detachably and interchangeably mountable on either the pair of headers **104a**, **104b** of the heat exchanger **100** or the pair of opposite side plates **102a, 102b** disposed on opposite sides of the heat exchanger core **102**.

Several modifications and improvement might be applied by the person skilled in the art to the protection system as defined above and such modifications and improvements will still be considered within the scope and ambit of the present invention, as long as it includes at least one net with a first pair of opposite sides and a second pair of opposite sides. The at least one net is deployed over at least one heat exchanger core to cover at least a portion of the at least one heat exchanger core, wherein the at least one net is mounted to either one of a pair of side plates of the at least one heat exchanger core and a pair of headers of the heat exchanger by means of a plurality of engagement elements to deploy the at least one net over the at least one heat exchanger core.

In any case, the invention cannot and should not be limited to the embodiments specifically described in this document, as other embodiments might exist. The invention shall spread to any equivalent means and any technically operating combination of means.

## Claims

1. A protection system (10) for a heat exchanger (100), said protection system (10) comprising at least one net (2) with a first pair of opposite sides (2a, 2b) and a second pair of opposite sides (2c, 2d), said at least one net (2) adapted to be deployed over at least one heat exchanger core (102) to cover at least a portion of said at least one heat exchanger core (102), wherein said at least one net (2) is adapted to be mounted to either one of a pair of side plates (102a, 102b) of said at least one heat exchanger core (102) and a pair of headers (104a, 104b) of said heat exchanger (100) by means of a plurality of engagement elements (3a, 3b, 6a, 6b, 106a, 106b, 3c, 3d, 6c, 6d, 106c, 106d) to deploy said at least one net (2) over said at least one heat exchanger core (102).

2. The protection system (10) as claimed in the previous claim, wherein said plurality of engagement elements (3a, 3b, 6a, 6b, 106a, 106b) are adapted to interchangeably mount said first pair of opposite sides (2a, 2b) of said at least one net (2) over said pair of headers (104a, 104b) of said heat exchanger (100).

3. The protection system (10) as claimed in any of the preceding claims, wherein said engagement elements (3a, 3b) are directly configured on respective sides of said first pair of opposite sides (2a, 2b) of said at least one net (2) and are adapted to detachably engage with said pair of headers (104a, 104b) of said heat exchanger (100).

4. The protection system (10) as claimed in any of the preceding claims, wherein the at least one net (12) is of either one of plastic and metal and comprises a pair of first frame elements (4a, 4b) integrally formed along said first pair of opposite sides (2a, 2b) thereof, said pair of first frame element (4a, 4b) configured with engagement elements (6a, 6b) adapted to detachably and interchangeably mount said pair of first frame elements (4a, 4b) with said at least one net (2) disposed there between to said pair of headers (104a, 104b) of said heat exchanger (100).

5. The protection system (10) as claimed in any of the preceding claims, wherein said pair of first frame elements (4a, 4b) is either one of metal and plastic, said pair of first frame elements (4a, 4b) is secured along said first pair of opposites sides (2a, 2b) of said at least one net (2) by either one of stamping, pressing and over-molding, further said pair of first frame elements (4a, 4b) is configured with engagement elements (6a, 6b) adapted to detachably mount said pair of first frame elements (4a, 4b) with said at least one net disposed there between, to said pair of headers (104a, 104b) of said heat exchanger (100).

6. The protection system (10) as claimed in any of the preceding claims, wherein said engagement elements (106a, 106b) are configured on said pair of headers (104a, 104b) and are adapted to interchangeably engage with either one of said first pair of opposite sides (2a, 2b) of said at least one net (2) and said pair of first frame elements (4a, 4b).

7. The protection system (10) as claimed in any of the preceding claims, wherein said plurality of second engagement elements (3c, 3d, 6c, 6d, 106c, 106d) are adapted to interchangeably mount said second pair of opposite sides (2c, 2d) of said at least one net (2) over said pair of side plates (102a, 102b) of said at least one heat exchanger core (102).

8. The protection system (10) as claimed in any of the preceding claims, wherein said second engagement elements (3c, 3d) are directly configured on said second pair of opposite sides (2c, 2d) of said at least one net (2) and are adapted to detachably engage with said pair of side plates (102a, 102b) of said at least one heat exchanger core (102).

9. The protection system (10) as claimed in any of the preceding claims, wherein said at least one net (2) is either one of plastic and metal and comprises a pair of second frame elements (4c, 4d) integrally formed along said second pair of opposite sides (2c, 2d) thereof, said pair of second frame elements (4c, 4d) configured with engagement elements (6c, 6d) adapted to detachably and interchangeably mount said pair of second frame elements (4c, 4d) with said at least one net (2) disposed there between to said pair of side plates (102a, 102b) of said at least one heat exchanger core (102).

10. The protection system (10) as claimed in any of the preceding claims, wherein said pair of second frame elements (4c, 4d) is either one of metal and plastic, said pair of frame elements (4c, 4d) is secured on said second pair of opposites sides (2c, 2d) of said at least one net (2) by either one of stamping, pressing and over-molding, further said pair of second frame elements (4c, 4d) is configured with engagement elements (6c, 6d) adapted to detachably mount said pair of second frame elements (4c, 4d) to said pair of side plates (102a, 102b) of said at least one heat exchanger core (102).

11. The protection system (10) as claimed in any of the preceding claims, wherein said engagement elements (106c, 106d) are configured on said pair of side plates (102a, 102b) and are adapted to interchangeably engage with either one of said second pair of opposite sides (2c, 2d) of said at least one net (2) and said pair of second frame elements (4c, 4d).

12. The protection system (10) as claimed in any of the preceding claims, wherein said at least one net (2) is of either one of Kevlar® and glass fibre material coated with Poly-tetra-fluoro-ethylene (PTFE) material.

13. The protection system (10) as claimed in one of the preceding claims, wherein the engagement elements (3a, 3b, 6a, 6b, 106a, 106b, 3c, 3d, 6c, 6d, 106c, 106d) are selected from a group comprising of snap fit engagement elements, hooks and clips.
